# EUROPEAN PATENT SPECIFICATION

(11) **EP 1 380 008 B1**
(45) Date of publication and mention of the grant of the patent: **20.02.2008**
(21) Application number: 02718755.8
(22) Date of filing: 04.04.2002
(51) Int. Cl.: G06K 19/06

(54) **METHOD FOR PROCESSING INFORMATION**
VERFAHREN ZUM VERARBEITEN VON INFORMATIONEN
PROCEDE DE TRAITEMENT D'INFORMATIONS

(30) Priority: 05.04.2001 SE 0101208
(43) Date of publication of application: 14.01.2004
(73) Proprietor: Anoto AB, 223 69 Lund (SE)
(72) Inventor: WIEBE, Linus, S-222 24 Lund (SE); ERICSON, Petter, S-211 49 Malmö (SE)
(74) Representative: Perklev, Karin Cecilia
(86) International application number: PCT/SE2002/000660
(87) International publication number: WO 2002/082366

(56) References cited:
- WO-A-01/16691
- WO-A-01/26034
- WO-A-01/71644
- WO-A1-01/75779
- WO-A1-99/50787
- US-A- 6 106 147
- US-B1- 6 176 427

## Description

### Technical Field

This invention relates to a method for generating a printout of a position-coding pattern, a system for generating a printout of a position-coding pattern, a printer device, a computer program and a digital storage medium.

### Background Art

This invention is intended to be used for the generation of position-coding patterns. A position-coding pattern is constructed of a large number of symbols which are printed on a base. By recording optically a particular minimum number of symbols with a reading device, the absolute position in the pattern of these symbols and thereby of the reading device can be detected.

Such a pattern can be used in various ways. For example, a reading device can be integrated into an ink pen that is used to write on the base. At the same time as the user writes text or draws a figure on the base, the movement of the pen over the base can be recorded as a sequence of positions. A digital copy of what the user wrote on the base is thereby created, without the use of a conventional scanner.

The position-coding pattern can be designed in a plurality of ways. It has been proposed that symbols in the form of dots of different sizes can be used, a large dot coding a "one" and a small dot coding a "zero". Such a pattern is described in WO 00/73983. Alternatively, dots with different displacements in relation to a raster can code different symbol values. Such patterns are described in WO 01/16691, PCT/SE0001895 and PCT/SE00/01897, published on 12.04.2001 as WO 01/26032 and WO 01/26033.

Such a position-coding pattern can code unique positions on a very large surface with good resolution. It is calculated that 4.6 million km² can be coded with unique positions with good resolution.

In many cases, bases with a position-coding pattern can be generated on a large scale and with high precision in the graphics industry, such as disclosed in aforesaid WO 01/16691 which suggests using standard offset printing to produce coded bases. This applies, for example, in the production of diaries or notepads. There are, however, also occasions when it is desirable to create bases with a position-coding pattern on a small scale. This can then be carried out using a personal computer, to which a printer of, for example, the ink-jet or laser type, has been connected.

This can be carried out in such a way that the required part of the position-coding pattern is created as a file in a graphical format, for example, in bmp format (bmp = bitmap). This graphical file is converted into a page-describing and normally printer-independent code, such as POSTSCRIPT (trademark), after which it is transmitted to the printer unit. On the basis of the page-describing code, the printer unit creates corresponding information which is used to control the printer's hardware. This hardware can, in the case of a laser printer, comprise a laser diode with associated optics. Where the printer is an ink-jet printer, the hardware comprises an ink ejector. The printout is then carried out on a base, for example a sheet of paper.

A problem associated with this method is that in the resultant printout the system introduces something that could be called "noise". This noise arises as a result of, among other things, quantizing, and results in small displacements and/or deformations of the symbols in the position-coding pattern. The quantizing arises when the graphical file is adapted to the page-describing code and/or when the page-describing code is adapted to the printer's hardware and software.

When printing out graphical files that describe other than position-coding patterns, for example images intended to be visible to the human eye, this does not normally cause problems. Small displacements or deformations of small elements in an image are not generally detected.

For a reading device of the above-mentioned type, which is intended to detect positions in a position-coding pattern, however, such displacements or deformations of the symbols in the pattern can cause problems, in that the reading device detects an incorrect or invalid position. This can occur if the resolution of the position-coding pattern is too high in relation to the performance of the printer and the quality (for example, the smoothness of the surface) of the base.

### Summary of the Invention

An object of this invention is to solve the above-mentioned problems completely or partially.

This object is achieved by a method for generating a printout of a position-coding pattern according to claim 1, a printer device according to claim 19, a system for generating a printout of a position-coding pattern according to claim 23, a computer program according to claim 24, and digital storage medium according to claim 25.

This makes it possible to adapt the printed-out pattern to suit the properties of the printer, which makes it possible to print out position-coding patterns with greater precision.

According to a preferred embodiment, the method further comprises the step of receiving the algorithm in the printer unit from the computer unit. This makes possible the printout of a pattern generated in the printer unit even though the printer unit is not specially equipped to print out such patterns.

Preferably, a plurality of sections, which can originate from separate parts of the global position-coding pattern, can be printed out on one and the same base. For this, several sets of boundary information are received in the printer unit from the computer unit. This makes possible the printout of more complex pattern compositions.

The pattern symbols can preferably consist of dots. This makes possible the printout of patterns with very high resolution.

The printer unit preferably receives, from the computer unit, a required pattern quality specification, whereby the printer unit using the algorithm adapts a set of printer parameters (for example dot size) on the basis of the pattern quality specification. This makes possible printer-independent printout of position-coding patterns with higher quality. A pattern with good quality can be generated autonomously. The printer unit can be provided with optical equipment that monitors the quality of the printed-out pattern and controls the parameters accordingly until the quality specification is attained.

In a preferred embodiment, the algorithm is so constituted that the distances between the pattern symbols in the graphical information are dependent upon a printer parameter. This can be used to eliminate completely or partially quantizing noise that arises if the printer does not have a relatively high resolution.

According to a preferred embodiment, the algorithm is so constituted that the pattern symbols in the graphical information are displaced relative to each other by whole multiples of the printer unit's smallest possible symbol displacement. This provides an optimal pattern at a given resolution of the printer unit.

For a printout where a position-coding pattern's scale is adjusted in relation to an ideal pattern, the printer unit is preferably arranged also to adjust the scale of the printed-out information that does not constitute the position-coding pattern. This provides better printouts when the mutual relationship between positions in a position-coding pattern and positions in other types of printout is important.

The algorithm is preferably so constituted that the size of the pattern symbols in the graphical information depends upon a parameter which is specific to the printer. This provides printed-out position-coding patterns with higher quality.

According to a preferred embodiment, the algorithm is so constituted that the intensity of the pattern symbols in the graphical information depends upon a parameter which is specific to the printer. This provides printed-out position-coding patterns with higher quality.

The printer unit preferably operates when printing out at a printout speed that is reduced in comparison to the printer's maximum printout speed. This provides printed-out position-coding patterns with higher quality.

If a section of a position-coding pattern is the shape of a planar curve, the corresponding boundary information comprises preferably a parameter representation of this curve. This makes it possible to describe a section of a position-coding pattern in a simple way.

According to an embodiment of the invention, at least one section is the shape of a rectangle, where corresponding boundary information comprises at least positions in the position-coding pattern for two diagonally opposite corners of the rectangle. This makes it possible to describe a section of a position-coding pattern in a simple way.

According to an embodiment of the invention, at least one section is the shape of a polygon, where corresponding boundary information comprises at least positions in the position-coding pattern for corners of the polygon. This makes it possible to describe a section of a position-coding pattern in a simple way.

According to an embodiment of the invention, at least one section is the shape of a circle, where corresponding boundary information comprises at least the position in the position-coding pattern for the center of the circle and a piece of information concerning the diameter of the circle. This makes it possible to describe a section of a position-coding pattern in a simple way.

According to an embodiment of the invention, at least one section is the shape of an ellipse, where corresponding boundary information comprises at least positions in the position-coding pattern for the foci of the ellipse and a piece of information concerning the total distance between on the one hand each of the foci and, on the other hand, a given point on the periphery of the ellipse. This makes it possible to describe a section of a position-coding pattern in a simple way.

Graphical information corresponding to a position-coding pattern is preferably printed out in the printer device using an ink that absorbs infrared light, and other graphical information is printed out using an ink that does not absorb infrared light. This makes it possible to detect the position-coding pattern using infrared light without other graphical information such a text or figures on the same sheet of paper causing interference.

Preferably, the ink that absorbs infrared light is a carbon-based ink which is reserved for the position-coding pattern.

According to a preferred embodiment, the printer unit comprises a paper tray intended for sheets of paper adapted for printout of position-coding patterns. This makes possible in a simple way the use of sheets of paper of high quality for the printout of position-coding patterns.

### Brief Description of the Drawings

Fig. 1 shows a system in which this invention can be used.
Fig. 2 shows a position-coding pattern of a first type.
Fig. 3 shows a position-coding pattern of a second type.
Fig. 4 shows in block diagram form an arrangement for printing out a position-coding pattern.
Fig. 5 shows in block diagram form an arrangement for printing out a position-coding pattern according to an embodiment of the invention.
Fig. 6 illustrates a problem with quantizing of symbol size.
Fig. 7 illustrates a problem with rapid printout in ink-jet printers.
Fig. 8 illustrates a problem with quantizing of symbol displacement distances.
Fig. 9 shows a flow chart for a method according to an embodiment of the invention.

### Description of Preferred Embodiments

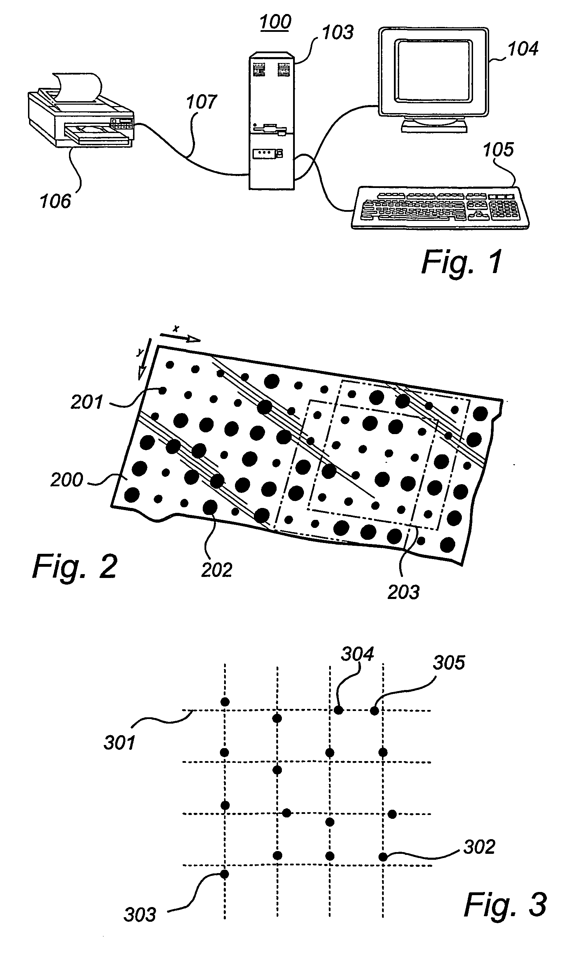

Fig. 1 shows a system 100 in which this invention can be used. The system comprises a computer unit, such as a personal computer 103, which has a monitor 104 and a keyboard 105 in the normal way. The personal computer 103 is connected to a printer unit 106 by means of, for example, a cable 107. The system is used to print out a position-coding pattern on a sheet of paper. At the same time as the position-coding pattern is printed out, other information can be printed out on the sheet of paper.

Fig. 2 shows a position-coding pattern of a first type, which is printed on a sheet of paper 200. In this pattern, dots of different sizes are used to code different symbol values. For example, a large dot 202 can code a logical "one" and a small dot 201 can code a logical "zero". By optically detecting symbol values within an area 203 of a certain minimum size, the position of the area in the total pattern and thus on the sheet of paper 200 can be determined unambiguously.

This can, for example, be used in a drawing device (not shown) in the form of a pen provided with an optical detector. Such an optical detector is disclosed in WO 01/71643, WO 01/71644, WO 01/16691, and WO 01/26034. The drawing device can be used to write, for example, text on the sheet of paper. At the same time, the optical detector records a sequence of positions on the sheet of paper, by taking images at regular intervals of the pattern that is located under the drawing device. This sequence of positions constitutes a digital copy of the text that was written on the sheet of paper.

Fig. 3 shows a position-coding pattern of a second type. In this case, different displacements of dots in relation to a raster pattern code different symbol values. The raster pattern consists of vertical and horizontal lines 301. In the actual application, however, the raster pattern does not need to be printed out. The symbol value of a dot can also be determined using other dots in the pattern. As shown in Fig. 3 there are dots above, below, to the right and to the left of a corresponding raster position (that is an intersection between a vertical and a horizontal line), for which reason there are four different symbol values in this pattern. This pattern can be used in a similar way to the pattern in Fig. 2.

The distance between two adjacent raster positions in the pattern in Fig. 3 can in an example be 300 µm. The dots can be displaced 50 µm from the respective raster positions. This gives a minimum distance between two adjacent dots (the left-hand one displaced to the right, the right-hand one displaced to the left) of 200 µm. The next smallest distance between two dots (for example, the left-hand dot displaced to the right, the right-hand dot displaced upwards) is 255 µm, given that all dots are displaced relative to their respective raster positions. The difference between the smallest and the next smallest distance becomes less if the displacements from the raster positions are made larger or the distances between the raster positions are reduced, which, if the difference is too small, results in less reliable detection.

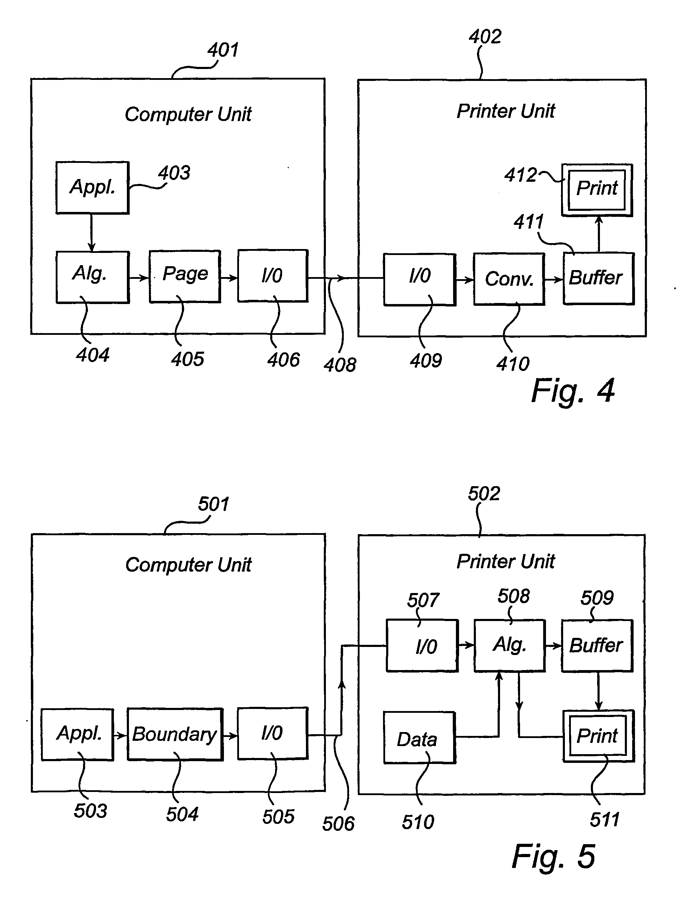

Fig. 4 shows a printout arrangement in block diagram form. The arrangement is of conventional type. There is a computer unit 401 and a printer unit 402. These are connected by a cable 408. An application 403 is active in the computer. If the application 403 initiates a printout of a position-coding pattern, instructions are sent concerning this to a module 404 for generation of the position-coding pattern. This generates a wholly or partly graphical file, for example in .gif-, .jpeg, .bmp-, .pdf- or .tiff-format. This file can be said to contain an ideal pattern. The graphical file is sent to a conversion module 405 which in a known way converts the graphical format into a page-describing code, for example in POSTSCRIPT^{™} format or in a PCL-(Printer Control Language)-format. Using an I/O (input-output) module 406 in the computer unit 401, the page-describing code is transmitted via the cable 408 to a corresponding I/O module 409 in the printer unit 402. The page-describing code is then forwarded to a conversion module 410, which converts it into graphical information, which constitutes the input data for the printer's hardware 412. This graphical information is entered in a buffer memory 411, from which it is read by the printer hardware 412. On the basis of the graphical information, the printer hardware 412 generates a printout on a sheet of paper, for example.

Fig. 5 shows in block diagram form an arrangement for printing out a position-coding pattern according to an embodiment of the invention. The arrangement comprises a computer unit 501 and a printer unit 502. An application 503 is running in the computer unit 501. The application initiates here a printout of a section of a position-coding pattern by sending instructions to a boundary module 504. The boundary module 504 then generates information regarding the boundaries of the section in a larger global position-coding pattern. The boundary module 504 can also generate information regarding the ideal resolution and ideal density of this section. The information that is generated by the boundary module 504 is transmitted to the printer unit 502 via, for example, a cable 506 and using an I/O module 505. It is recognized that the transmission can be carried out by other means, such as an infrared link or a short-range radio link. The transmitted information is received by an I/O module 507 in the printer unit 502 and forwarded to an algorithm module 508 in the printer unit. The algorithm module 508 generates graphical information on the basis of information from the boundary module 504 in the computer unit 501, which graphical information describes pattern symbols in the section of the global position-coding pattern. As the algorithm module 508 has access to data 510 regarding the properties of the printer, such as resolution, ink type, etc, optimal graphical information describing pattern symbols can be generated and entered in a buffer memory 509. As a result, problems which will be described in greater detail below, are completely or partially avoided. In addition, the transmission from the computer unit to the printer unit takes place more rapidly, since less information needs to be transmitted, as the pattern is generated in the printer unit.

As in the arrangement in Fig. 4, printer hardware 511 in the printer unit 502 generates a printout on the basis of the information in the buffer memory 509. The position-coding pattern is preferably printed out using an ink that absorbs infrared light, and other graphical information using an ink that does not absorb infrared light. For example, in an ink-jet printer the position-coding pattern can be printed out using a carbon-based black ink, while other information can be printed out using a RGB (Red, Green, Blue) combination (or CMY combination), which also may produce a black ink that does not absorb infrared light. This can be carried out using ink cartridges found in many ink-jet printers and makes it possible for the position-coding pattern to be detected using infrared light without other graphical information such as text or figures on the same sheet of paper causing interference. Some printers, having the capability to use both carbon-based black ink and RGB-ink for producing graphics, automatically chooses the carbon-based ink option for all black graphics. In a preferred embodiment of the invention, this automatic feature is blocked when graphics containing a position-coding pattern is generated, so that the carbon-based ink is reserved for the position-coding pattern only, and the RGB-option is used for other black graphics.

The printer unit can comprise a paper tray intended for sheets of paper adapted for the printout of position-coding patterns. If a printout comprises a position-coding pattern, the printer automatically selects paper from this tray. This makes possible in a simple way the use of sheets of paper of high quality for the printout of position-coding patterns.

A printer arrangement as shown in Fig. 5 can of course comprise modules for printing out other information than position-coding patterns in the normal way. The arrangement can therefore also comprise modules for generating and translating a page-describing code, which work completely or partially in parallel with and independently of the arrangement in Fig. 5. Where the other information comprises parts that have a critical position on the sheet of paper relative to the position-coding pattern, these parts can, however, also be adapted to the position-coding pattern.

The algorithm module 508 can be constructed in a plurality of different ways. It can consist of a system that calculates mathematically the appearance of the pattern based on the boundary information. It is also possible to have the algorithm module 508 comprise a memory that contains information concerning the appearance of a larger or smaller part of the position-coding pattern.

In general, the modules shown in Fig. 5 can comprise both hardware and software.

In principle, it is possible to obtain boundary information from other sources than the computer unit that prints out other visual information (for example text, a figure, a table or the like) on the printer. The printer can then have an operating means, such as a button. Activating the operating device activates the printer's algorithm (optionally this can be permanently activated), which without this having been initiated by the computer unit generates graphical information corresponding to a position-coding pattern. This graphical information is superimposed on the visual information during the printout. The printer can then preferably be arranged to obtain boundary information from a computer system connected to the printer, which computer system can be other than the above-mentioned computer unit. The boundary information is used by the algorithm in the printer. This permits a locally unique pattern, unique within a group of users, (for example at a workplace) to be used for the printout, which avoids the danger of a "collision" in the pattern during digital recording which is carried out by means of the pattern.

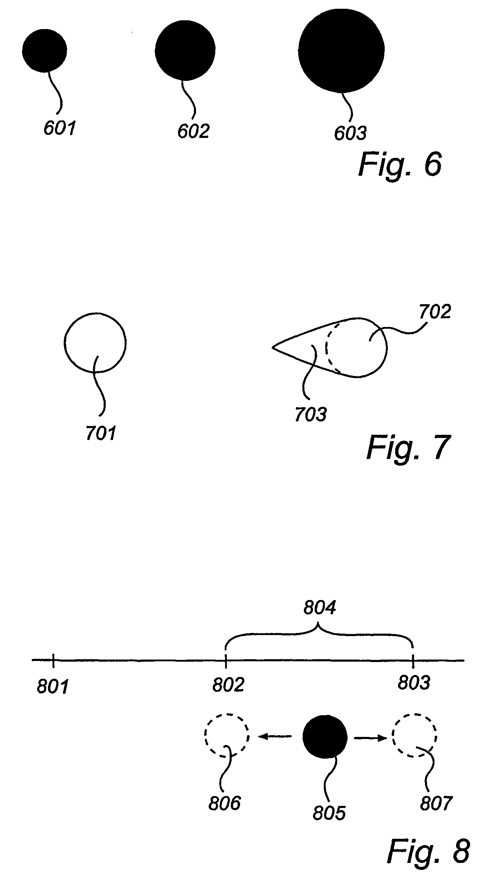

Fig. 6 illustrates a problem with quantizing of symbol size. A printer unit cannot necessarily generate a dot of any size. It is normal for a printer to generate a number of different dot sizes, which are adapted to the printer's hardware. The dots 601, 602 and 603 are examples of such dot sizes. If the printout of a position-coding pattern is carried out using a conventional arrangement such as the one in Fig. 4, there is a danger that the required ideal symbol size, that is preferably the dot size, does not correspond with the sizes that can be generated by the printer. Normally, during conversion of the page-describing code, these dots are replaced by dots of the size that is closest, that is the size of the dots is quantized.

Assume that a pattern of the type shown in Fig. 2 is to be printed out. The larger ideal dot 202 is a size that lies between the sizes of the dots 602 and 603. The smaller ideal dot type 201 is a size that lies between the sizes of the dots 601 and 602. In a worst case scenario, the printer unit will print out both the large and the small dots in the ideal pattern the same size as dot 602. All the symbols in such a pattern will have the same symbol value and such a pattern will, of course, be unusable.

Quantizing of dot size can also cause problems in patterns of the type shown in Fig. 3. If the dots are made too large in a pattern with high resolution, they can join together, which can make optical detection of positions in the pattern impossible.

If instead the printout is carried out with an arrangement according to the invention, such as the one shown in Fig. 5, the pattern of the algorithm module 508 can be adapted to suit the properties of the printer. In the example with the pattern in Fig. 2, dots of the type 601 can, for example, be chosen to represent small dots and dots of the type 602 can be chosen to represent large dots.

Fig. 7 illustrates a problem with printing out on ink-jet printers. The problem arises during rapid printing, when the printer head moves comparatively quickly in relation to a sheet of paper. The problem reveals itself as a "tail" 702 behind a dot 701. The dot is therefore deformed, which can result in incorrect or omitted optical detection of a position in a position-coding pattern. In an arrangement according to an embodiment of the invention, this can be avoided by reducing the print speed when printing out position-coding patterns. This is shown in Fig. 5 where the algorithm module 508 causes the printer hardware 511 to reduce the print speed.

Fig. 8 illustrates a problem with quantizing of symbol displacement distances. The resolution in printout varies from printer to printer. Analogous with this, the smallest possible distance that a dot, for example in a position-coding pattern, can be displaced varies. In a printer with a resolution of 800 dpi (dots per inch) the least distance a dot can be displaced is eight hundredths of an inch. This imposes a restriction on the printout. In Fig. 8, a number of positions 801, 802, 803 are shown along an axis, at which positions a dot can be placed. The distance 804 between them is the least symbol displacement distance of the printer.

If a dot should ideally be placed at a position 805 between the above-mentioned positions, the printer will displace this to any of the possible positions, cf. 806, 807, when printing out. This involves a quantizing of the symbol position. It is obvious that such displacements of the symbol position can cause problems when printing out a position-coding pattern such as the one shown in Fig. 3. This is both because a symbol can be given an incorrect position in relation to its raster position, and also because the raster position that is calculated using other dots in an image of the pattern will be calculated incorrectly. It cannot be assumed that the displacement is identical for all the dots in the pattern.

If instead the printout is carried out with an arrangement according to the invention, such as the one shown in Fig. 5, the pattern of the algorithm module 508 can be adapted to suit the properties of the printer. In the example with the pattern in Fig. 3, the distances between the raster positions and the displacements of the dots in relation to the respective raster position can be whole multiples of the printer's smallest possible symbol displacement, which will permit the printout of a useable pattern.

In an example, a printer is used with the resolution 600 dpi (which gives a minimum displacement b = 42.33 µm). An ideal pattern of the type shown in Fig. 3 is to be printed out. In the example, this is ideally 300 µm between the raster positions and 50 µm displacement of the dots in relation to the raster positions. Printing out in the conventional way in accordance with Fig. 4 results, as mentioned, in uneven displacements of the pattern symbols, which, in addition to resulting in the danger of incorrect position detection, produces an interference pattern in the printout that is annoying to the eye.

By adapting the printout to the properties of the printer, the printout can be improved. The boundary information can comprise or be accompanied by information defining within what limits the pattern can be changed, but such information can also be stored in the printer unit. For example, the displacement of a dot can preferably lies within the range one eighth to one quarter of the distance between two raster positions. If the printer's resolution is good, as a rule there are many possible combinations for the choice of raster position distance and dot displacement distance. Preferably the solutions are then selected that deviate least from the ideal required pattern.

In an embodiment, the distance between the raster positions can be changed to 254 µm (6·b) (unchanged dot displacement). This adjustment alone produces a better pattern with considerably less interference pattern.

In another embodiment, both the distance between the raster positions and the displacement distance are changed. The distance between the raster positions can be changed to 296.33 µm (7.b) and the displacement distance to 42.33 µm (b). This provides a perfect pattern, completely without interference. Another alternative can be to change the distance between the raster positions to 254 µm (6·b) and the displacement distance to 42.33 µm (b). Note that even a small adjustment of the raster position distance and the dot displacement distance from the required distances can have a positive effect on the printed-out position-coding pattern.

In those cases where the displacement distances are adjusted downwards, it can be advantageous to reduce the dot size if necessary, so that the dot does not cover its raster position.

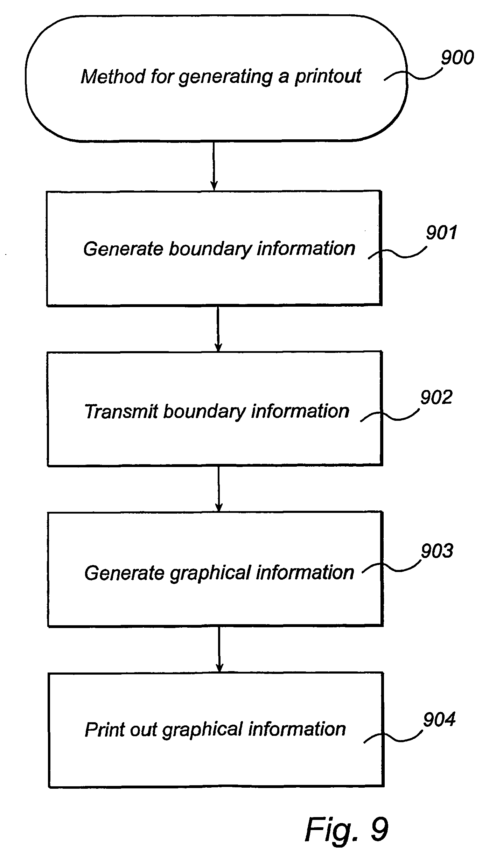

Fig. 9 shows a flow chart for a method 900 according to an embodiment of the invention.

In a first step 901 boundary information is generated in the computer unit, which boundary information describes the boundaries of a section in a global position-coding pattern.

If a section is the shape of a planar curve, the boundary information can comprise a parameter representation of this curve.

If the section is the shape of a rectangle, corresponding boundary information can comprise positions in the position-coding pattern for two diagonally opposite corners of the rectangle.

If the section is the shape of a polygon, corresponding boundary information can comprise positions in the position-coding pattern for corners of the polygon. The polygon does not need to be equilateral, but if it is equilateral or symmetrical in some other way, it is often sufficient to have a smaller number of position indications than the number of corners of the polygon.

If the section is the shape of a circle, corresponding boundary information can comprise the position in the position-coding pattern for the center of the circle and a piece of information concerning the diameter of the circle.

If the section is the shape of an ellipse, corresponding boundary information can comprise positions in the position-coding pattern for the foci of the ellipse and a piece of information concerning the total distance between, on the one hand, each of the foci and, on the other hand, a given point on the periphery of the ellipse.

In a second step 902, boundary information is transmitted from the computer unit to the printer unit. Together with the boundary information, information concerning other properties of the pattern can be transmitted, for example dot size.

Several sections can be printed out on one and the same base. For this, several sets of boundary information are transmitted from the computer unit to the printer unit. The different sections can originate from separate parts of the global position-coding pattern.

A third step 903 generates graphical information in the printer unit by means of an algorithm which defines the global position-coding pattern and on the basis of the boundary information, which graphical information describes pattern symbols in the section. Optionally, the algorithm can also be transmitted from the computer unit to the printer. The algorithm can then be written in a page-describing code.

In a fourth step 904, the graphical information is printed out by the printer unit on a base.
The invention is not restricted to the embodiments described above.

## Claims

1. A method for generating a printout of at least one section of a global position-coding pattern, comprising the steps of
- receiving, in a printer unit (502) from a computer unit (501), boundary information describing the boundaries of the at least one section in the global position-coding pattern;
- generating graphical information in the printer unit (502) by means of an algorithm that defines the global position-coding pattern, the algorithm using the boundary information to generate the graphical information which describes pattern symbols representing said global position-coding pattern in said at least one section; and
- printing out by said printer unit (502) said graphical information on a base.

2. A method according to claim 1, which further comprises the step of receiving said algorithm in the printer unit (502) from the computer unit (501).

3. A method according to claim 1 or 2, wherein a plurality of sections are printed out on one and the same base, several sets of boundary information being received in the printer unit (502) from the computer unit (501).

4. A method according to claim 3, wherein sections in said plurality of sections originate from separate parts of the global position-coding pattern.

5. A method according to any one of the preceding claims, wherein said pattern symbols consist of dots.

6. A method according to any one of the preceding claims, wherein the printer unit (502) receives, from the computer unit (501), a required pattern quality specification and wherein the printer unit (502), by means of said algorithm, adapts a set of printer parameters on the basis of the pattern quality specification.

7. A method according to any one of the preceding claims, wherein said algorithm is so constituted that the distances between said pattern symbols in said graphical information are dependent upon a printer parameter.

8. A method according to any one of the preceding claims, wherein said algorithm is so constituted that said pattern symbols in said graphical information are displaced relative to each other by essentially whole multiples of the printer unit's smallest possible symbol displacement.

9. A method according to any one of claims 7-8, wherein, where the scale of a position-coding pattern has been adjusted in relation to an ideal pattern, the printer unit (502) is arranged, when printing out, also to adjust the scale of printed-out information that does not constitute a position-coding pattern.

10. A method according to any one of the preceding claims, wherein said algorithm is so constituted that the size of said pattern symbols in said graphical information is dependent upon a parameter that is specific to the printer unit (502).

11. A method according to any one of the preceding claims, wherein said algorithm is so constituted that the intensity of said pattern symbols in said graphical information is dependent upon a parameter that is specific to the printer unit (502).

12. A method according to any one of the preceding claims, wherein when printing out the printer unit (502) operates with a print speed that is reduced in comparison to the printer unit's (502) maximum print speed.

13. A method according to any one of the preceding claims, wherein at least one section is the shape of a planar curve, corresponding boundary information comprising a parameter representation of this curve.

14. A method according to any one of the preceding claims, wherein at least one section is the shape of a rectangle, corresponding boundary information comprising at least positions in the position-coding pattern for two diagonally opposite corners of the rectangle.

15. A method according to any one of the preceding claims, wherein at least one section is the shape of a polygon, corresponding boundary information comprising at least positions in the position-coding pattern for corners of the polygon.

16. A method according to any one of the preceding claims, wherein at least one section is the shape of a circle, corresponding boundary information comprising at least the position in the position-coding pattern for the center of the circle and a piece of information concerning the diameter of the circle.

17. A method according to any one of the preceding claims, wherein at least one section is the shape of an ellipse, corresponding boundary information comprising at least positions in the position-coding pattern for the foci of the ellipse and a piece of information concerning the total distance between on the one hand each of the foci and, on the other hand, a given point on the periphery of the ellipse.

18. A method according to any one of the preceding claims, further comprising: generating the boundary information in the computer unit (501), and transmitting the boundary information from the computer unit (502) to the printer unit (502).

19. A printer device for generating a printout of at least one section of a global position-coding pattern, the printer device being intended to be connected to a computer unit (501), said printer device comprising:
- means (507) for receiving boundary information from the computer unit (501), which boundary information describes the boundaries of the at least one section in the global position-coding pattern;
- means (508) for generating graphical information representing said global position-coding pattern by means of an algorithm that defines the global position-coding pattern, the algorithm using the boundary information to generate the graphical information, which describes pattern symbols in said section; and
- means (511) for printing out said graphical information on a base.

20. A printer device according to claim 19, wherein graphical information corresponding to a position-coding pattern is printed out using an ink that absorbs infrared light, and other graphical information is printed out using an ink that does not absorb infrared light.

21. A printer device according to claim 20, wherein the ink that absorbs infrared light is a carbon-based ink and wherein the carbon-based ink is reserved for the position-coding pattern.

22. A printer device according to any of claims 19 to 21, further comprising a paper tray intended for sheets of paper adapted for printout of position-coding patterns.

23. A system (100) comprising a computer unit (103) and a printer device (106) according to any one of claims 19-22 wherein the printer device is connected to the computer unit, and wherein the computer unit comprises:
- means (504) for generating the boundary information describing the boundaries of the section in the global position-coding pattern; and
- means (505) for transmitting the boundary information to the printer device (106).

24. A computer program comprising program instructions adapted to cause a processor to perform a method according to any of claims 1-18.

25. A digital storage medium, containing a computer program according to claim 24.

## Patentansprüche

1. Verfahren zum Erzeugen eines Ausdrucks mindestens einer Sektion eines globalpositionscodierenden Musters, die folgende Schritte umfassend:
- Empfangen von Grenzinformationen, die die Grenzen der mindestens einen Sektion in dem globalpositionscodierenden Muster beschreiben, von einer Computereinheit (501) in einer Druckereinheit (502);
- Erzeugen graphischer Informationen in der Druckereinheit (502) mit Hilfe eines Algorithmus, der das globalpositionscodierende Muster definiert, wobei der Algorithmus an Hand der Grenzinformationen die graphischen Informationen generiert, die die das globalpositionscodierende Muster darstellenden Mustersymbole in der mindestens einen Sektion beschreiben; und
- Ausdrucken der graphischen Informationen auf einer Basis durch die Druckereinheit (502).

2. Verfahren nach Anspruch 1, das weiterhin den Schritt des Empfangens des Algorithmus in der Druckereinheit (502) von der Computereinheit (501) umfaßt.

3. Verfahren nach Anspruch 1 oder 2, wobei mehrere Sektionen auf ein und derselben Basis ausgedrückt werden, wobei mehrere Sätze von Grenzinformationen in der Druckereinheit (502) von der Computereinheit (501) empfangen werden.

4. Verfahren nach Anspruch 3, wobei die Sektionen in den mehreren Sektionen von separaten Teilen des globalpositionscodierenden Musters kommen.

5. Verfahren nach einem der vorhergehenden Ansprüche, wobei die Mustersymbole aus Punkten bestehen.

6. Verfahren nach einem der vorhergehenden Ansprüche, wobei die Druckereinheit (502) von der Computereinheit (501) eine erforderliche Musterqualitätsspezifikation empfängt und wobei die Druckereinheit (502) mit Hilfe des Algorithmus einen Satz von Druckparametern auf der Basis der Druckerqualitätsspezifikation adaptiert.

7. Verfahren nach einem der vorhergehenden Ansprüche, wobei der Algorithmus so aufgebaut ist, daß die Abstände zwischen den Mustersymbolen in den graphischen Informationen von einem Druckerparameter abhängen.

8. Verfahren nach einem der vorhergehenden Ansprüche, wobei der Algorithmus so aufgebaut ist, daß die Mustersymbole in den graphischen Informationen relativ zu einander durch im wesentlichen ganzzahlige Vielfache der kleinstmöglichen Symbolverschiebung der Druckereinheit verschoben werden.

9. Verfahren nach einem der Ansprüche 7-8, wobei, wenn die Skala eines positionscodierenden Musters in Relation zu einem idealen Muster justiert worden ist, die Druckereinheit (502) so ausgelegt ist, daß sie beim Ausdrucken auch die Skala der ausgedruckten Informationen justiert, die nicht ein positionscodierendes Muster bilden.

10. Verfahren nach einem der vorhergehenden Ansprüche, wobei der Algorithmus so aufgebaut ist, daß die Größe der Mustersymbole in den graphischen Informationen von einem für die Druckeinheit (502) spezifischen Parameter abhängen.

11. Verfahren nach einem der vorhergehenden Ansprüche, wobei der Algorithmus so aufgebaut ist, daß die Intensität der Mustersymbole in den graphischen Informationen von einem für die Druckeinheit (502) spezifischen Parameter abhängen.

12. Verfahren nach einem der vorhergehenden Ansprüche, wobei beim Ausdrucken die Druckereinheit (502) mit einer Druckgeschwindigkeit arbeitet, die im Vergleich zu einer größten Druckgeschwindigkeit der Druckereinheit (502) reduziert ist.

13. Verfahren nach einem der vorhergehenden Ansprüche, wobei mindestens eine Sektion die Gestalt einer ebenen Kurve aufweist, wobei entsprechende Grenzinformationen eine Parameterdarstellung dieser Kurve umfassen.

14. Verfahren nach einem der vorhergehenden Ansprüche, wobei mindestens eine Sektion die Gestalt eines Rechtecks aufweist, wobei entsprechende Grenzinformationen mindestens zwei Positionen in dem positionscodierenden Muster für zwei diagonal gegenüberliegende Ecken des Rechtecks umfassen.

15. Verfahren nach einem der vorhergehenden Ansprüche, wobei mindestens eine Sektion die Gestalt eines Polygons aufweist, wobei entsprechende Grenzinformationen mindestens Positionen in dem positionscodierenden Muster für Ecken des Polygons umfassen.

16. Verfahren nach einem der vorhergehenden Ansprüche, wobei mindestens eine Sektion die Gestalt eines Kreises ist, wobei entsprechende Grenzinformationen mindestens die Position in dem positionscodierenden Muster für die Mitte des Kreises und ein Stück Information hinsichtlich des Durchmessers des Kreises umfassen.

17. Verfahren nach einem der vorhergehenden Ansprüche, wobei mindestens eine Sektion die Gestalt einer Ellipse ist, wobei entsprechende Grenzinformationen mindestens Positionen in dem positionscodierenden Muster für die Brennpunkte der Ellipse und ein Stück Information hinsichtlich des Gesamtabstands zwischen einerseits jedem der Brennpunkte und andererseits einem gegebenen Punkt auf der Peripherie der Ellipse umfassen.

18. Verfahren nach einem der vorhergehenden Ansprüche, weiterhin umfassend: Erzeugen der Grenzinformationen in der Computereinheit (501) und Übertragen der Grenzinformationen von der Computereinheit (501) zu der Druckereinheit (502).

19. Druckereinrichtung zum Erzeugen eines Ausdrucks mindestens einer Sektion eines globalpositionscodierenden Musters, wobei die Druckereinrichtung mit einer Computereinheit (501) verbunden sein soll, wobei die Druckereinrichtung folgendes umfaßt:
- Mittel (507) zum Empfangen von Grenzinformationen von der Computereinheit (501), wobei die Grenzinformationen die Grenzen der mindestens einen Sektion in dem globalpositionscodierenden Muster beschreiben;
- Mittel (508) zum Erzeugen graphischer Informationen, die das globalpositionscodierende Muster darstellen, mit Hilfe eines Algorithmus, der das globalpositionscodierende Muster definiert, wobei der Algorithmus an Hand der Grenzinformationen die graphischen Informationen generiert, die Mustersymbole in der Sektion beschreiben; und
- Mittel (511) zum Ausdrucken der graphischen Informationen auf einer Basis.

20. Druckereinrichtung nach Anspruch 19, wobei einem positionscodierenden Muster entsprechende graphische Informationen unter Verwendung einer Tinte ausgedruckt werden, die Infrarotlicht absorbiert, und andere graphische Informationen unter Verwendung einer Tinte ausgedruckt werden, die kein Infrarotlicht absorbiert.

21. Druckereinrichtung nach Anspruch 20, wobei die Tinte, die Infrarotlicht absorbiert, eine kohlenstoffbasierte Tinte ist, und wobei die kohlenstoffbasierte Tinte für das positionscodierende Muster reserviert ist.

22. Druckereinrichtung nach einem der Ansprüche 19 bis 21, weiterhin umfassend eine Papierschale, die für Papierblätter gedacht ist, die für den Ausdruck von positionscodierenden Mustern adaptiert sind.

23. System (100), umfassend eine Computereinheit (103) und eine Druckereinrichtung (106) nach einem der Ansprüche 19 bis 22, wobei die Druckereinrichtung mit der Computereinheit verbunden ist und wobei die Computereinheit folgendes umfaßt:
- Mittel (504) zum Generieren der die Grenzen der Sektion in dem globalpositionscodierenden Muster beschreibenden Informationen und
- Mittel (505) zum Übertragen der Genzinformationen an die Druckereinrichtung (106).

24. Computerprogramm, umfassend Programmanweisungen, die ausgelegt sind, um zu bewirken, daß ein Prozessor ein Verfahren nach einem der Ansprüche 1 bis 18 ausführt.

25. Digitales Speicherungsmedium, ein Computerprogramm nach Anspruch 24 enthaltend.

## Revendications

1. Procédé de génération d'une sortie sur imprimante d'au moins une portion d'un schéma global de codage de position, comportant les étapes consistant à :
- recevoir, sur une unité (502) d'imprimante d'une unité informatique (501), des informations de limites décrivant les limites de la ou des portions dans le schéma global de codage de position ;
- générer des informations graphiques sur l'unité (502) d'imprimante au moyen d'un algorithme définissant le schéma global de codage de position, l'algorithme utilisant les informations de limites pour générer les informations graphiques décrivant des symboles de schéma représentant ledit schéma global de codage de position dans ladite ou lesdites portions ; et
- imprimer à l'aide de ladite unité (502) d'imprimante lesdites informations graphiques sur une base.

2. Procédé selon la revendication 1, comportant en outre l'étape consistant à recevoir ledit algorithme dans l'unité (502) d'imprimante en provenance de l'unité informatique (501).

3. Procédé selon la revendication 1 ou 2, dans lequel une pluralité de portions est imprimée sur une seule et même base, plusieurs ensembles d'informations de limites étant reçus dans l'unité (502) d'imprimante en provenance de l'unité informatique (501).

4. Procédé selon la revendication 3, dans lequel des portions de ladite pluralité de portions émanent de parties distinctes du schéma global de codage de position.

5. Procédé selon l'une quelconque des revendications précédentes, dans lequel lesdits symboles de schéma sont constitués de points.

6. Procédé selon l'une quelconque des revendications précédentes, dans lequel l'unité (502) d'imprimante reçoit depuis l'unité informatique (501) une spécification de qualité requise du schéma et dans lequel l'unité (502) d'imprimante, au moyen dudit algorithme, adapte un ensemble de paramètres d'imprimante sur la base de la spécification de qualité du schéma.

7. Procédé selon l'une quelconque des revendications précédentes, dans lequel ledit algorithme est constitué de telle sorte que les distances entre lesdits symboles de schéma dans lesdites informations graphiques dépendent d'un paramètre d'imprimante.

8. Procédé selon l'une quelconque des revendications précédentes, dans lequel ledit algorithme est constitué de telle sorte que lesdits symboles de schéma dans lesdites informations graphiques soient écartés les uns des autres de multiples essentiellement entiers du plus petit déplacement possible de symbole de l'unité d'imprimante.

9. Procédé selon l'une quelconque des revendications 7 à 8, dans lequel, lorsque l'échelle d'un schéma de codage de position a été ajustée en fonction d'un schéma idéal, l'unité (502) d'imprimante est agencée de façon à ajuster également, lors de l'impression, l'échelle des informations imprimées qui ne constituent pas un schéma de codage de position.

10. Procédé selon l'une quelconque des revendications précédentes, dans lequel ledit algorithme est constitué de telle sorte que la taille des symboles de schéma dans lesdites informations graphiques dépend d'un paramètre spécifique à l'unité (502) d'imprimante.

11. Procédé selon l'une quelconque des revendications précédentes, dans lequel ledit algorithme est constitué de telle sorte que l'intensité desdits symboles de schéma dans lesdites informations graphiques dépend d'un paramètre spécifique à l'unité (502) d'imprimante.

12. Procédé selon l'une quelconque des revendications précédentes, dans lequel l'unité (502) d'imprimante fonctionne lors de l'impression à une vitesse d'impression réduite en comparaison de la vitesse maximale d'impression de l'unité (502) d'imprimante.

13. Procédé selon l'une quelconque des revendications précédentes, dans lequel au moins une portion présente la forme d'une courbe plane, des informations de limites correspondantes comportant une représentation paramétrique de cette courbe.

14. Procédé selon l'une quelconque des revendications précédentes, dans lequel au moins une portion présente la forme d'un rectangle, des informations de limites correspondantes comportant au moins des positions dans le schéma de codage de position de deux sommets diagonalement opposés du rectangle.

15. Procédé selon l'une quelconque des revendications précédentes, dans lequel au moins une portion présente la forme d'un polygone, des informations de limites correspondantes comportant au moins des positions dans le schéma de codage de position de sommets du polygone.

16. Procédé selon l'une quelconque des revendications précédentes, dans lequel au moins une portion présente la forme d'un cercle, des informations de limites correspondantes comportant au moins la position dans le schéma de codage de position du centre du cercle et un élément d'information concernant le diamètre du cercle.

17. Procédé selon l'une quelconque des revendications précédentes, dans lequel au moins une portion présente la forme d'une ellipse, des informations de limites correspondantes comportant au moins des positions dans le schéma de codage de position des foyers de l'ellipse et un élément d'information concernant la distance totale entre, d'une part, chacun des foyers et, d'autre part, un point donné sur la périphérie de l'ellipse.

18. Procédé selon l'une quelconque des revendications précédentes, comportant en outre les étapes consistant à : générer les informations de limites dans l'unité informatique (501), et transmettre les informations de limites de l'unité informatique (501) à l'unité (502) d'imprimante.

19. Dispositif d'imprimante destiné à générer une sortie sur imprimante d'au moins une portion d'un schéma global de codage de position, le dispositif d'imprimante étant prévu pour être relié à une unité informatique (501), ledit dispositif d'imprimante comportant :
- un moyen (507) de réception d'informations de limites provenant de l'unité informatique (501), lesdites informations de limites décrivant les limites de la ou des portions dans le schéma global de codage de position ;
- un moyen (508) de génération d'informations graphiques au moyen d'un algorithme définissant le schéma global de codage de position, l'algorithme utilisant les informations de limites pour générer les informations graphiques décrivant des symboles de schéma dans ladite portion ; et
- un moyen (511) d'impression desdites informations graphiques sur une base.

20. Dispositif d'imprimante selon la revendication 19, dans lequel des informations graphiques correspondant à un schéma de codage de position sont imprimées à l'aide d'une encre absorbant la lumière infrarouge et dans lequel d'autres informations graphiques sont imprimées à l'aide d'une encre n'absorbant pas la lumière infrarouge.

21. Dispositif d'imprimante selon la revendication 20, dans lequel l'encre absorbant la lumière infrarouge est une encre à base de carbone et dans lequel l'encre à base de carbone est réservée au schéma de codage de position.

22. Dispositif d'imprimante selon l'une quelconque des revendications 19 à 21, comportant en outre un bac à papier prévu pour des feuilles de papier adaptées à l'impression de schémas de codage de position.

23. Système (100) comportant une unité informatique (103) et un dispositif d'imprimante (106) selon l'une quelconque des revendications 19 à 22, dans lequel le dispositif d'imprimante est relié à l'unité informatique et dans lequel l'unité informatique comporte :
- un moyen (504) de génération des informations de limites décrivant les limites de la portion dans le schéma global de codage de position ; et
- un moyen (505) de transmission des informations de limites au dispositif d'imprimante (106).

24. Programme informatique comportant des instructions de programme prévues pour faire en sorte qu'un processeur réalise un procédé selon l'une quelconque des revendications 1 à 18.

25. Support de stockage numérique contenant un programme informatique selon la revendication 24.
